(19) **Europäisches Patentamt**

**European Patent Office**

**Office européen des brevets**

(11) Veröffentlichungsnummer: **0 284 778 B1**

(12) **EUROPÄISCHE PATENTSCHRIFT**

(45) Veröffentlichungstag der Patentschrift: **29.04.92**

(21) Anmeldenummer: **88102781.7**

(22) Anmeldetag: **25.02.88**

(51) Int. Cl.5: **F01D 5/28**, B64C 11/26, F04D 29/02, F04D 29/38

(54) **Gebläseschaufel, insbesondere für Prop-Fan-Triebwerke.**

(30) Priorität: **28.03.87 DE 3710321**

(43) Veröffentlichungstag der Anmeldung:
**05.10.88 Patentblatt 88/40**

(45) Bekanntmachung des Hinweises auf die
Patenterteilung:
**29.04.92 Patentblatt 92/18**

(84) Benannte Vertragsstaaten:
**FR GB IT SE**

(56) Entgegenhaltungen:
**EP-A- 0 121 462       DE-A- 1 503 480**
**DE-A- 1 954 062       FR-A- 2 443 591**
**US-A- 1 360 596       US-A- 3 671 139**
**US-A- 3 737 250       US-A- 4 302 155**

(73) Patentinhaber: **MTU MOTOREN- UND
TURBINEN-UNION MÜNCHEN GMBH
Dachauer Strasse 665 Postfach 50 06 40
W-8000 München 50(DE)**

(72) Erfinder: **Sikorski, Siegfried
Seitzstrasse 21
W-8000 München 22(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Bei Gasturbinenstrahltriebwerken wird vielfach der überwiegende Teil des Vortriebschubs durch ummantelte Front- oder Heckgebläse mit verhältnismäßig großem Durchmesser bereitgestellt, wodurch sich entsprechend große Schaufellängen ergeben; insbesondere im Hinblick auf einstufige Gebläseausführungen sind auch verhältnismäßig breite Gebläseschaufeln häufig anzutreffen. Um die Triebwerksleistungscharakteristik an den variablen Schubbedarf anzupassen, sind die Gebläseschaufeln verstellbar am Gebläserotor angeordnet.

Bei in jünster Zeit propagierten Prop-Fan-Triebwerken, also Gasturbinenanlagen mit insbesondere triebwerksheckseitig angeordneten, im allgemeinen nicht ummantelten Propellergebläsen sind - konzeptionsbedingt - extrem große Propellerdurchmesser (etwa bis zu vier Meter), und damit extrem lange wie aber auch breite Propellerblätter erforderlich; zudem weisen dabei die Blätter bzw. Gebläselaufschaufeln eine komplexe geometrische Gestaltung auf; d. h., sie sind, besonders in den Außenabschnitten, extrem dünn und zusätzlich axial gepfeilt sowie in Umfangsrichtung sichelförmig gekrümmt.

Ein derartiges Prop-Fan-Triebwerk mit heckseitig angetriebenen Einzelpropeller nebst Propellerblattverstellung ist z.B. aus der DE-PS 33 04 417 bekannt.

Auch sind z.B. gemäß der DE-OS 36 11 792 Prop-Fan-Triebwerke mit triebwerksfrontseitig angeordneten, im Gegensinne umlaufenden und nicht ummantelten Propellern bekannt.

Ferner wurde schon ein Prop-Fan-Triebwerkskonzept vorgeschlagen, bei dem die im Gegensinne umlaufenden Propeller ummantelt sind, um - unter der Ausnutzung der Vorteile des gegenläufigen Prop-Fan (hohe Rotorbelastung bei gleichzeitig möglichst großem Nebenstromverhältnis und gutem Wirkungsgradpotential) - u. a. den Lärm am Entstehungsort sowie schließlich den Prop -Fan-Durchmesser verringern zu helfen.

Die Gestaltbarkeit und die Anordnung der Gebläse- oder Fan-Schaufeln hat wesentlichen Einfluß auf die Realisierbarkeit der Gasturbinenstrahltriebwerke, im besonderen aber der vorgenannten "Prop-Fan-Triebwerke". Dabei sind die nachstehend u. a. vermerkten Anforderungen nur schwer zu erfüllen bzw. in Einklang miteinander zu bringen.

- Bei den angegebenen Triebwerktypen, insbesondere in Verbindung mit "Prop-Fans", sind verhältnismäßig groß gebaute Gebläseschaufeln mit hohem Eigengewicht zu erwarten; um die fußseitigen Zugbeanspruchungen und damit örtliche Belastungen am Verstellmechanismus bzw. am Verstellzapfen möglichst gering zu halten, muß für ein geringes Schaufelblattgewicht Sorge getragen werden;
- Die Fremdkörper-, insbesondere Vogelschlagauftreffgefahr, muß ausreichend beherrscht werden können, d. h., bei Extrembelastungen des Schaufelblattes sollte ein sicheres Abstellen des Triebwerks, ohne Teileaustritt, möglich sein; es sollen dabei etwaige Blattschäden so gering wie möglich gehalten werden können;
- Trotz schon eingangs genannter komplexer Schaufelblattgestaltung mit teilweise extrem dünnen bzw. schlanken Schaufelabschnitten muß das Schaufelblatt den betrieblichen Steifigkeitsanforderungen genügen können; das im Rahmen vergleichsweise hoher Grundbiegefrequenzen auftretende "Schaufelblattflattern" muß beherrscht werden können;
- möglichst einfacher Austausch einzelner Gebläse- bzw. Prop-Fan-Schaufeln.

Der eingangs umrissene Forderungskatalog kann auch im Rahmen eines älteren Vorschlags weitestgehend nicht erfüllt werden; u. a. aus Gewichtsgründen sollen bei diesem Vorschlag die Gebläse- bzw. Prop-Fan-Schaufeln aus einem faserverstärkten Kunststoff (FVK) gefertigt sein; dabei soll ferner die zur Verstellkrafteinleitung und Blattfixierung vorgesehene metallische, z.B. aus Titan gefertigte Nabe verhältnismäßig großflächig ballig und weit in das Kunststoffblatt hineinragen. Die Faserblattschale soll dabei materialschlüssig durch Verklebung mit der innen liegenden Gegenfläche des metallischen Nabenteils verbunden werden.

Im Hinblick auf die betrieblichen Anforderungen krankt dieser Vorschlag u. a. an der empfindlichen Klebeverbindung zwischen Metall (Titan) und dem Kunststoff-Werkstoff des Schaufelblatts. Wärmedehnungs- und Elastizitätsunterschiede führen zu relativ frühzeitigen Ermüdungserscheinungen.

Ferner werden dabei Schaufelschlagbeanspruchungen nicht ausreichend berücksichtigt bzw. kompensiert. Es hat sich nämlich gezeigt, daß fasertechnische Werkstoffe ein elastisch-sprödes Verhalten aufweisen und bei entsprechender Überlastung zum Bruch neigen. Das verhältnismäßig groß zu gestaltende und pilzförmig in das Schaufelblatt hineinragende metallische Naben- bzw. Zapfenteil führt zu einem vergleichsweise hohen Schaufel-, insbesondere Blattgewicht.

Gemäß einem aus der DE-A-15 03 480 bekannten und dem Oberbegriff des Patentanspruchs 1 zugrunde gelegten bekannten Fall geht es darum, die Schaufeldrehlagerung gegenüber den im Betrieb auftretenden Schaufelfliehkräften zu entlasten, um so eine stets möglichst leichte, einwandfreie Schaufelverstellung gewährleisten zu können. Dabei stellt der Faserkörper einen Zugstab dar, der unter faserartiger Verknüpfung mit dem Schaufelblatt und dem Drehteller durch einen Verstellschaft und einen Nabenkörper in Radialrichtung hindurchgeführt und an einem achsnahen Wellenabschnitt über eine Schraube schlaufenartig verankert ist.

Aus der US-A-4,302,155 ist eine verstellbare Gebläseschaufel bekannt, bei der das äußere Schaufelblatt aus einem mehrlageigen Faser-Verbund-Kunststoff gefertigt ist. Der Kern im Schaufelblatt soll aus einem Kunststoff-Schaum gefertigt sein; die Schaufelbasis stellt einen metallischen Kern dar, der im oberen Berich für die Schaummasse (Kern) tassenförmig ausgenommen ist und der im unteren Bereich in einen ringförmigen Drehflansch übergeht, an dem das betreffende Blattende radial/seitlich ausläuft. Im bekannten Fall sind paarweise kragenförmige Abschnitte vorgesehen, die mittels lippenförmiger äußerer Endteile die radial inneren Enden des Schaufelblatts am Drehflansch festlegen sollen; zugleich sind dabei aber die kragenförmigen Abschnitte als die Schaufelverdrehung stützend übertragende Teile ausgebildet und mit einem drehbeweglichen Schalenelemente eines Kugellagers verbunden; das feste Schalenelement des Kugellagers soll Bestandteil eines von der Habe radial herausragenden Hülsenstückes sein.

Der Erfindung liegt die Aufgabe Zugrunde, eine verstellbare Gebläseschaufel nach der eingangs genannten bekannten Art (Oberbegriff des Patentanspruchs 1) anzugeben, die bei vergleichsweise geringem Gewicht insbesondere extreme Schlagbeanspruchungen (Vogelschlag) kompensiert und betriebssicher am Rotor bzw. der Propellernabe verankert ist.

Die gestellte Aufgabe ist durch die im Kennzeichnungsteil des Patentanspruchs 1 angegebenen Merkmale erfindungsgemäß gelöst.

Es werden also im Wege der Verbindungsanordnung und -ausbildung "Schaufelbltt/Verstellzapfen" zwei Lastpfade geschaffen, von denen der eine die Schlagenergie bei Vogelschlag aufnimmt (Delamination zwischen Schaufelblatt und Faserkörper sowie blattinnenseitige biegeelastische Abstützung); der andere Lastpfad ist als Hauptanschluß so gestaltet, daß er trotz Vogelschlagbeanspruchung zumindest kurzzeitig alle Betriebslasten aufnehmen kann.

Es enthält dabei die metallische Habe bzw. der Verstellzapfen die drehtellerartige Erweiterung bzw. einen scheibenförmigen integrierten Steg, der über Formschluß (Bolzen, Niete) und gegebenenfalls Klebung die Verstell-(Torsions-) Kräfte aufnimmt. Bei Vogelschlagbeanspruchungen stütz sich das fasertechnische Blattprofil seitlich am Steg ab. Bei extremer Überbeanspruchungen wird bewußt eine großflächige Delamination (ohne Bruch) der Profilschale im Nabenbereich toleriert. Dadurch wird Schlagenergie abgebaut, ohne die Nabe durch Stoßkräfte zu überlasten. Durch Spleißen der Profilfläche infolge Delamination auf der Zugseite entsteht gleichzeitig ein Zugstab, welcher Seitenkräfte auf das Blatt bei ausreichender Elastizität (Abfangen des Stoßes durch Auslenkung des Blattes) aufnimmt und einen Bruch des Faserkörpers verhindert. Der hohle zylindrische, metallische Verstellzapfen, welcher zur drehbaren Blattlagerung und Krafteinleitung in den Rotor dient, nimmt im Inneren den aus dem Blattprofil verlaufenden zentrischen Faserkörper auf, über den die Flieh- und Luftkräfte eingleitet werden. Der Faserkörper kann am Verstellzapfen (nabenseitig) material- und formschlüssig, z.B. durch Kleben und/oder Verbolzen, befestigt werden. Ein zentrischer Metallholm, der in das Blattprofil ragt, kann zur Kraftübertragung von den Befestigungsbolzen auf den Faserkörper dienen und zur weiteren Erhöhung der Verbindungsfestigkeit im Nabenbereich genutzt werden. Vorzugsweise sollte der Übergangsbereich von der Naben-Zapfen-Seite zur Profilschale geeignet elastisch (z.B. V-förmig geschlitzt) gestaltet werden, um eine möglichst gleichmäßige Krafteinleitung bei Biegebelastung zu gewährleisten.

Bezüglich vorteilhafter Ausgestaltungen der Erfindung wird auf die Merkmale der Patentansprüche 2 bis 12 verwiesen.

Anhand er Zeichnungen ist die Erfindung beispielsweise weiter erläutert; es zeigen:

Fig. 1 einen Radialschnitt einer blattseitig abgebrochen dargestellten Gebläseschaufel nebst drehzapfenseitiger Verankerung an der Propellernabe,

Fig. 2 eine Schnittansicht gemäß II - II der Fig. 1,

Fig. 3 eine gegenüber Fig. 1 verkleinerte Radialschnittdarstellung der Gebläseschaufel, worin die Vogelschlagkompensation (Delamination, Kern-Holm-Verformung) verdeutlicht ist und

Fig. 4 die weitere Ausführungsform einer als Radialschnitt sowie blatt- und zapfenseitig abgebrochen dargestellten Gebläseschaufel, wobei der Verstellzapfen ins Schaufelblattinnere geführt ist.

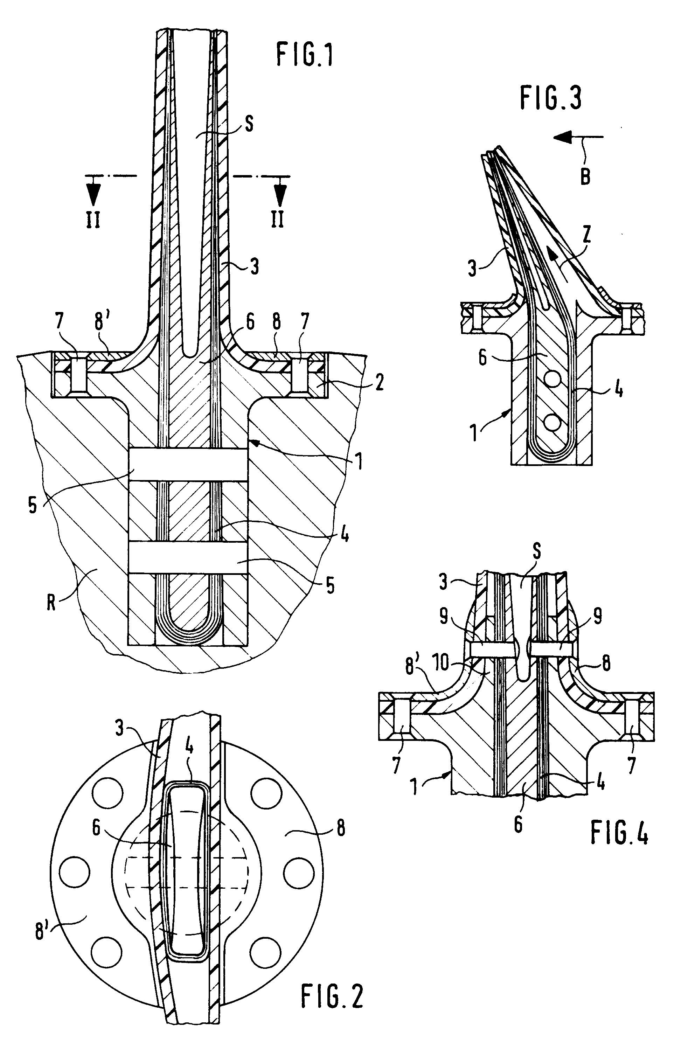

Die Fig. 1 und 2 zeigen eine verstellbare Gebläseschaufel eines Prop-Fans, die ein aus faserverstärktem Kunststoff gefertigtes Schaufelblatt 3 aufweist und mit einem eine drehtellerartige Erweiterung 2 enthaltenden metallischen Verstellzapfen 1 am Rotor R verankert ist; dabei soll das Schaufelblatt 3 an der Erweiterung 2 seitlich auslenkbar kraft- und formschlüssig festgelegt sein; ferner soll am Verstellzapfen 1 ein darin eingesetzter Faserkörper 4 befestigt sein, der eine ins Innere des Schaufelblatts 3 geführte Blattabstützung ausbildet.

Vorzugsweise kann der Faserkörper 4 zusammen mit dem Schaufelblatt 3 gefertigt sein.

Weiter soll in den Faserkörper 4 ein zentraler Metallholm 6 eingesetzt sein, der mit dem Verstellzapfen 1 und dem Faserkörper 4 kraftschlüssig verbunden ist.

Ferner soll ein ins Blattinnere geführter Teil des Metallholmes 6 elastisch verformbar ausgebildet und angeordnet sein; hierzu kann z.B. der ins Blattinnere geführte Teil des Metallholmes 6 nach oben offen V-förmig geschlitzt ausgebildet sein (Schlitzaussparung S). Gemäß Fig. 1 weist das Schaufelblatt 3 auf die drehtellerartige Erweiterung 2 abgestimmt gestaltet auslaufende Wandenden auf; auf diese Wandenden des Schaufelblattes 3 sind entsprechend abgestimmt gestaltete äußere Zwischenstücke 8,8' aufgesetzt, die gemäß Fig. 4 eine formschlüssige, profilblattseitig hochgezogene Schaufelblattumklammerung ausbilden können.

Die äußeren Zwischenstücke 8,8' können ferner zusammen mit den unteren Wandenden des Schaufelblatts 3 mit der Erweiterung 2, vorzugsweise im äußeren Randbereich derselben, kraft- und formschlüssig, z.B. durch Miete 7, Bolzen oder dergleichen, unmittelbar verbunden sein (Fig. 1 und 4).

Gemäß Fig. 4 sitzt das Schaufelblatt 3 auf einem die drehtellerartige Erweiterung 2 überragenden Hohlkörperende 10 des Verstellzapfens 1. Insbesondere für diesen Fall (Fig.4) kann das Schaufelblatt 3 zusätzlich, z.B. durch Miete 9, mit dem Hohlkörperende 10 des Verstellzapfens 1 verbunden sein, indem die Niete 9 in Höhe der V-förmigen Schlitzaussparung S angeordnet und zur gemeinsamen Verbindung der äußeren Zwischenstücke 8,8' und des Schaufelblatts 3 sowie des Metallholms 6 und des Faserkörpers 4 mit dem Hohlkörperende 10 ausgebildet sind.

Der Faserkörper 4 kann mit dem Verstellzapfen 1 verklebt sein (Fig. 1 oder 4).

Wie in Fig. 1 dargestellt und sinngemäß auch für Fig.3 und 4 geltend, ist in den vorliegenden Beispielen der Metallholm 6 mittels Bolzen 5 kraftschlüssig mit dem Verstellzapfen 1 verbunden, wobei der Faserkörper 4 formschlüssig zwischen Metallholm 6 und Verstellzapfen 1 eingebettet ist.

In nicht weiter dargestellter Weise kann der jeweilige Verstellzapfen 1 einer Gebläseschaufel z.B. unter Zwischenschaltung von Sprengringen oder dergleichen in Lagerbuchsen verstellbar gehaltert sein, wobei die Lagerbuchsen am Rotor R fest angeordnet sind.

Fig. 3 verkörpert das Krafteinleitungsprinzip bzw. Kraftkompensationsprinzip bei Biegebelastungen (Pfeil B) durch Vorgelschlag, wobei das Schaufelblatt 3 bzw. die Profilschale als "Zugstab" wirkt; die örtliche Delamination ist durch den Pfeil z verdeutlicht. Im Rahmen der dabei örtlichen Verformung des Metallholms 6 und des Faserkörpers 4 ist die vormals in Fig. 1 offene V-Aussparung S im wesentlichen zusammengeklappt, bzw. kerninnenflächenkongruent verschlossen.

Bezüglich der Werkstoffauswahl und -ausbildung folgendes:
Der Kunststoffwerkstoff des Schaufelblatts 3 kann durch Kohle-, Glas-oder organische aromatische Polyamid-Fasern oder durch eine Kombination mindestens zweier genannter Faserarten verstärkt sein.

Der Faserkörper 4 kann im wesentlichen aus Kohlenstoff-Fasern mit vergleichsweise hohem Elastizitäts-Modul gefertigt sein.

Die genannten Fasern können in eine Epoxid-oder Polyimid-Harz-Matrix eingebettet sein.

Die äußeren Zwischenstücke 8,8' können aus einem metallischen Werkstoff, z.B. Titan bzw. einer Titanlegierung oder Aluminium bzw. einer Aluminiumlegierung, gefertigt sein.

Die äußeren Zwischenstücke 8,8' können aber auch im wesentlichen aus hohzähen Fasern, insbesondere organischen aromatischen Polyamid-Fasern (Aramid) oder Glasfasern, gefertigt sein.

**Patentansprüche**

1. Verstellbare Gebläseschaufel, insbesondere für Prop-Fan-Triebwerke, die mit einem eine drehtellerartige Erweiterung (2) enthaltenden metallischen Verstellzapfen (1) am Rotor (R) verankert ist und ein aus faserverstärktem Kunststoff gefertigtes Schaufelblatt (3) aufweist, das an der Erweiterung (2) kraft- und formschlüssig festgelegt ist, wobei im Verstellzapfen (1) ein Faserkörper (4) sitzt, der eine in das innere Blattlaminat der Schaufel eingebundene Blattabstützung ausbildet, gekennzeichnet durch folgende Merkmale:

   a) das Schaufelblatt (3) weist auf die Erweiterung (2) abgestimmt gestaltete, seitlich auslaufende Wandenden auf und ist zusammen mit auf den Wandenden aufsitzenden Halteplatten (8,8') an der Erweiterung, vorzugsweise im äußeren Randbereich, seitlich auslenkbar festgelegt;

   b) in den Faserkörper (4) ist ein Metallholm (6) eingesetzt, der mit dem Verstellzapfen (1) und dem Faserkörper (4) kraftschlüssig (5) verbunden ist;

   c) der entlang des Faserkörpers (4) in das Blattinnere geführte Teil des Metallholmes (6) ist in Blattquerrichtung elastisch verformbar ausgebildet.

# EP 0 284 778 B1

**2.** Gebläseschaufel nach Anspruch 1, dadurch gekennzeichnet, daß der ins Blattinnere geführte Teil des Metallholmes (6) durch eine in Richtung auf das äußere Holmende offene, V-förmige Schlitzaussparung (S) elastisch verformbar ausgebildet ist.

**3.** Gebläseschaufel nach Anspruch 1, dadurch gekennzeichnet, daß die Halteplatten (8,8') zusammen mit den Wandenden des Schaufelblatts (3) mit der Erweiterung (2) durch Miete (7), Bolzen oder dergleichen verbunden sind.

**4.** Gebläseschaufel nach Anspruch 3, dadurch gekennzeichnet, daß die Halteplatten (8,8') eine formschlüssige profilblattseitig hochgezogene Schaufelblattumklammerung ausbilden.

**5.** Gebläseschaufel nach Anspruch 1, dadurch gekennzeichnet, daß das Schaufelblatt (3) zusätzlich auf einem die drehtellerartige Erweiterung (2) überragenden Hohlkörperende (10) des Verstellzapfens (1) sitzt.

**6.** Gebläseschaufel nach Anspruch 1, dadurch gekennzeichnet, daß der Faserkörper (4) mit dem Verstellzapfen (1) verklebt ist.

**7.** Gebläseschaufel nach Anspruch 1, dadurch gekennzeichnet, daß der Metallholm (6) mittels Bolzen (5) oder dergleichen kraftschlüssig mit dem Verstellzapfen (1) verbunden ist, wobei der Faserkörper (4) formschlüssig zwischen Metallholm (6) und Verstellzapfen (1) eingebettet ist.

**8.** Gebläseschaufel nach Anspruch 1, dadurch gekennzeichnet, daß der Kunststoffwerkstoff des Schaufelblattes (3) durch Kohle-, Glas- oder organische aromatische Polyamid-Fasern oder durch eine Kombination mindestens zweier genannter Faserarten verstärkt ist.

**9.** Gebläseschaufel nach Anspruch 1, dadurch gekennzeichnet, daß der Faserkörper (4) im wesentlichen aus Kohlenstoff-Fasern mit vergleichsweise hohem Elastizitäts-Modul gefertigt ist.

**10.** Gebläseschaufel nach Anspruch 8 oder 9, dadurch gekennzeichnet, daß die Fasern in eine Epoxid- oder Polyimid-Harz-Matrix eingebettet sind.

**11.** Gebläseschaufel nach Anspruch 1, dadurch gekennzeichnet, daß die Halteplatten (8,8') aus einem metallischen Werkstoff, z.B. Titan bzw. einer Titanlegierung oder Aluminium bzw. einer Aluminiumlegierung, gefertigt sind.

**12.** Gebläseschaufel nach Anspruch 1, dadurch gekennzeichnet, daß die Halteplatten (8,8') im wesentlichen aus hochzähen Fasern, insbesondere organischen aromatischen Polyamid-Fasern (Aramid) oder Glasfasern, gefertigt sind.

**Claims**

**1.** Adjustable fan vane, in particular for prop-fan mechanisms, which is anchored on the rotor (R) by means of a metallic adjusting journal (1) comprising a widened portion (2) in the form of a rotary plate, and comprises a vane blade (3) which is produced from fibre-reinforced plastics material and is secured in a force and form-locking manner on the widened portion (2), a fibrous member (4) being mounted in the adjusting journal (1) and forming a blade support incorporated in the inner blade laminate of the vane, characterised by the following features:

a) the vane blade (3) comprises wall ends, which taper laterally and are formed so as to be adapted to the widened portion (2), and is secured on the widened portion, preferably in the outer edge area, together with retaining plates (8, 8') mounted on the wall ends in a manner such that it can be laterally deflected;

b) there is inserted in the fibrous member (4, a metal spar (6) which is connected in a force-locking manner to the adjusting journal (1) and the fibrous member (4);

c) the section of the metal spar (6) guided along the fibrous member (4) into the interior of the blade is constructed so as to be resiliently deformable in the transverse direction of the blade.

**2.** Fan vane according to Claim 1, characterised in that the section of the metal spar (6) guided into the interior of the blade is formed so as to be resiliently deformable by a V-shaped slotted recess (S) which is open towards the outer spar end.

**3.** Fan vane according to Claim 1, characterised in that the retaining plates (8, 8') are connected together with the wall ends of the vane blade (3) to the widened portion (2) by means of rivets (7), bolts or the like.

**4.** Fan vane according to Claim 3, characterised in that the retaining plates (8, 8') form a form-locking member which embraces the vane blade and is raised up at the profiled blade end.

**5.** Fan vane according to Claim 1, characterised in that the vane blade (3) is in addition mounted on a hollow member end (10) of the adjusting journal (1) which projects above the widened portion (2) in the form of a rotary plate.

**6.** Fan vane according to Claim 1, characterised in that the fibrous member (4) is stuck to the adjusting journal (1).

**7.** Fan blade according to Claim 1, characterised in that the metal spar (6) is connected to the adjusting journal (1) by means of bolts (5) or the like in a force-locking manner, wherein the fibrous member (4) is embedded in a form-locking manner between the metal spar (6) and the adjusting journal (1).

**8.** Fan vane according to Claim 1, characterised in that the plastics material of the vane blade (3) is reinforced with carbon, glass or organic aromatic polyamide fibres or by a combination of at least two of the said types of fibre.

**9.** Fan vane according to Claim 1, characterised in that the fibrous member (4) is substantially produced from carbon fibres with a comparatively high modulus of elasticity.

**10.** Fan vane according to Claim 8 or 9, characterised in that the fibres are embedded in an epoxy or polyimide resin matrix.

**11.** Fan vane according to Claim 1, characterised in that the retaining plates (8, 8') are produced from a metallic material, for example titanium or a titanium alloy or aluminium or an aluminium alloy.

**12.** Fan vane according to Claim 1, characterised in that the retaining plates (8, 8') are substantially produced from highly viscous fibres, in particular organic aromatic polyamide fibres (aramide) or glass fibres.

**Revendications**

**1.** Pale de soufflante réglable, notamment pour moteurs à turbo soufflante, qui est ancrée sur le rotor (R) avec un tourillon de réglage (1) métallique comprenant un élargissement (2) de type plateau tournant et qui présente une feuille de pale (3) en matière plastique renforcée par des fibres, qui est fixée sur l'élargissement (2) géométriquement et en prise mécanique, un corps de fibres (4) étant logé dans le tourillon de réglage (1), corps qui forme un appui de pale inséré à l'intérieur du lamifié de pale, caractérisée par les paramètres suivants :

a) la feuille de pale (3) présente des extrémités de paroi s'étendant latéralement se raccordant à l'élargissement (2) et elle est fixée à l'élargissement avec les plaques de maintien (8, 8') reposant sur les extrémités de paroi, de préférence dans le domaine périphérique externe, de façon à pouvoir fléchir latéralement ;

b) dans le corps de fibres (4), est inséré un longeron métallique (6) qui est relié en prise mécanique au tourillon de réglage (1) et au corps de fibres (4) ;

c) la pièce du longeron métallique (6) insérée le long du corps de fibres (4) à l'intérieur de la pale est réalisée de façon à être déformable élastiquement dans le sens transversal à la pale.

**2.** Pale de soufflante selon la revendication 1, caractérisée en ce que la pièce du longeron métallique (6) insérée à l'intérieur de la feuille est réalisée de manière élastiquement déformable grâce à un évidement en forme de fente, en V, ouvert vers l'extrémité extérieure du longeron.

**3.** Pale de soufflante selon la revendication 1, caractérisée en ce que les plaques de maintien (8, 8') sont reliées avec les extrémités de paroi de la pale (3) à l'élargissement (2) par des rivets (7), des boulons ou analogues.

**4.** Pale de soufflante selon la revendication 3, caractérisée en ce que les plaques de maintien (8, 8') entoure géométriquement la feuille de pale et constituent un serrage au dessus du profilé de feuille.

**5.** Pale de soufflante selon la revendication 1, caractérisée en ce que la feuille de pale (3) repose en plus sur une extrémité (10) de corps creux du tourillon de réglage (1) dépassant l'élargissement (2) de type plateau tournant.

**6.** Pale de soufflante selon la revendication 1, caractérisée en ce que le corps de fibres (4) est collé au tourillon de réglage (1).

**7.** Pale de soufflante selon la revendication 1, caractérisée en ce que le longeron métallique (6) est fixé au moyen de boulons (5) ou analogues en prise mécanique avec le tourillon de réglage (1), le corps de fibres (4) étant inséré géométriquement entre le longeron métallique (6) et le tourillon (1) de réglage.

8. Pale de soufflante selon la revendication 1, caractérisée en ce que le matériau en matière plastique de la feuille de pale (3) est renforcé par des fibres de carbone, de verre ou de polyamide aromatique organique ou par une combinaison d'au moins deux types de fibres citées.

9. Pale de soufflante selon la revendication 1, caractérisée en ce que le corps de fibres (4) est réalisé essentiellement en fibres de carbone de module d'élasticité comparativement élevé.

10. Pale de soufflante selon la revendication 8 ou 9, caractérisée en ce que les fibres sont noyées dans une matrice de résine époxy ou polyimide.

11. Pale de soufflante selon la revendication 1, caractérisée en ce que les plaques de maintien (8, 8') sont réalisées en un matériau métallique, par exemple le titane, ou un alliage de titane, ou l'aluminium, ou un alliage d'aluminium.

12. Pale de soufflante selon la revendication 1, caractérisée en ce que les plaques de maintien (8, 8') sont essentiellement réalisées en fibres très résistantes, notamment en fibres polyamides aromatiques organiques (aramide) ou en fibres de verre.

EP 0 284 778 B1

FIG.1

FIG.3

FIG.2

FIG.4